Europäisches Patentamt

European Patent Office

Office européen des brevets

(19)

(11) EP 0 613 491 B1

(12) **EUROPÄISCHE PATENTSCHRIFT**

(45) Veröffentlichungstag und Bekanntmachung des Hinweises auf die Patenterteilung:
**08.01.1997 Patentblatt 1997/02**

(21) Anmeldenummer: **93918972.6**

(22) Anmeldetag: **09.09.1993**

(51) Int Cl.6: **C09D 11/10**

(86) Internationale Anmeldenummer:
**PCT/DE93/00835**

(87) Internationale Veröffentlichungsnummer:
**WO 94/06874 (31.03.1994 Gazette 1994/08)**

(54) **WASSERFARBE, DIE ZUR HERSTELLUNG VON DEINKBAREN ERZEUGNISSEN GEEIGNET IST**

WATER-BASED INK SUITABLE FOR THE PRINTING OF DE-INKABLE PRODUCTS

ENCRE A L'EAU CONVENANT POUR LA FABRICATION DE PRODUITS POUVANT ETRE DESENCRES

(84) Benannte Vertragsstaaten:
**AT BE CH DE ES FR GB IE IT LI NL SE**

(30) Priorität: **21.09.1992 DE 4231566**

(43) Veröffentlichungstag der Anmeldung:
**07.09.1994 Patentblatt 1994/36**

(73) Patentinhaber: **MICHAEL HUBER MÜNCHEN GMBH**
**85551 Kirchheim (DE)**

(72) Erfinder:
• **BUCHWEITZ, Jörg**
**D-85716 Unterschleissheim (DE)**
• **KRIEG, Rudolf**
**D-85586 Poing (DE)**

(74) Vertreter: **Antritter, Jürn Dietolf Gerald**
**Patentanwälte**
**Motsch & Antritter,**
**St.-Anna-Platz 4**
**80538 München (DE)**

(56) Entgegenhaltungen:
**CH-A- 610 924**      **US-A- 5 106 417**

• **DERWENT's ABSTRACTS, Woche 7906; AN 11322 B/06**
• **IBM TECHNICAL DISCLOSURE BULLETIN, Band 22, No. 5, Oktober 1979; P.J. EISELE et al., Seite 1953**
• **DIALOG INFORMATION SERVICES, WPI, Dialog AN 009338246; HAIMO KK, WPI AN 93-031709/04**

**Beschreibung**

Die Erfindung betrifft Wasserfarben, die zur Herstellung von im Flotationsverfahren deinkbaren Erzeugnissen geeignet sind und die insbesondere beim Flexo- und Tiefdruckverfahren sowie beim Streichverfahren zur Herstellung von Papierstrichen verarbeitet werden.

In Europa erfolgt das Deinken von Altpapier hauptsächlich nach dem Flotationsverfahren. Die Hauptmasse des Altpapiers, das von Illustrierten, Zeitschriften, Katalogen, Telefonbüchern, Zeitungen etc. herrührt, läßt sich dabei im allgemeinen so gut deinken, daß man mit der Qualität des wiedergewonnenen Papiers zufrieden sein kann.

Bis in die jüngste Vergangenheit hinein waren jedoch Drucke mit wäßrigen Flexo- und Tiefdruckfarben, die ökologisch vorteilhaft sind, jedoch im Flotationsverfahren schlecht deinkbar. Es wurden unter den Bedingungen des Deinkens sehr kleine, nicht flotierbare Farbpartikel freigesetzt, die zu einer gleichmäßigen und intensiven Anfärbung des Bedruckstoffs führten. Dies hatte einen nicht hinnehmbaren Weißgradverlust des Bedruckstoffs zur Folge.

Um ein vertretbares Deinkingergebnis zu erhalten, wurden daher Drucke mit konventionellen Wasserfarben nach dem sogenannten Waschverfahren deinkt. Dieses Verfahren führt jedoch zu hohen Füllstoff- und Kurzfaserverlusten, so daß die Ausbeute an wiederverwertbarer Papiermasse deutlich geringer und die Abwasserbelastung deutlich höher ist als beim Flotationsverfahren.

Auch bunte Papiere, die durch eine Tinting- bzw. Massefärbung hergestellt wurden, führen beim Deinken zu großen Problemen.

Durch gesetzgeberische Aktivitäten in Deutschland wird eine Erhöhung der Wiederverwertungsquote von Altpapier verlangt, so daß gute Deinkbarkeit aller im Altpapier vorkommenden Objekte nach dem in Deutschland ganz überwiegend praktizierten Flotations-Deinkingverfahren notwendig ist.

In der DE-Patentanmeldung P 41 15 731.1-43, die von der Anmelderin stammt, wurde eine Wasserfarbe beschrieben, die zur Herstellung von im Flotationsverfahren deinkbaren Drucken geeignet ist. Die mit diesen Farben hergestellten Drucke führen jedoch zu Deinkingergebnissen, die noch nicht voll befriedigen. So können weder die dabei erzielten Deinkbarkeits-Maßzahlen noch der Weißgradgewinn als optimal angesehen werden.

Aufgabe der Erfindung ist es daher, Bindemittelsysteme auszuwählen mit denen neue Farbformulierungen zur Verfügung gestellt werden können, die die Nachteile des Standes der Technik überwinden.

Diese Aufgabe wurde überraschenderweise gelöst durch eine Wasserfarbe, die zur Herstellung von nach dem Flotationsverfahren deinkbaren Erzeugnissen geeignet ist und die dadurch gekennzeichnet ist, daß sie im wesentlichen

a) 1 - 50 Gew.-% eines oder mehrerer anorganischer oder organischer Pigmente,
b) 1 - 50 Gew.-% (Festkörper) eines oder mehrerer wasserverdünnbarer nichtionischer und/oder selbstvernetzender Acrylharze
c) 0 - 25 Gew.-% eines oder mehrerer niedrig siedender Alkohole,
d) 10 - 90 Gew.-% Wasser und
e) 0 - 20 Gew.-% Hilfsmittel

enthält.

Bevorzugt ist eine Wasserfarbe, die im wesentlichen

a) 8 - 17 Gew.-% eines oder mehrerer anorganischer oder organischer Pigmente,
b) 15 - 45 Gew.-% (Festkörper) eines oder mehrerer wasserverdünnbarer nichtionischer und/oder selbstvernetzender Acrylharze,
c) 0 - 5 Gew.-% eines oder mehrerer niedrig siedender Alkohole,
d) 20 - 60 Gew.-% Wasser und
e) 1 - 10 Gew.-% Hilfsmittel

enthält.

Besonders bevorzugt ist eine Wasserfarbe, die im wesentlichen,

a) 10 - 15 Gew.-% eines oder mehrerer anorganischer oder organischer Pigmente,
b) 25 - 42 Gew.-% (Festkörper) eines oder mehrerer wasserverdünnbarer nichtionischer und/oder selbstvernetzender Acrylharze,
c) 0 - 1 Gew.-% eines oder mehrerer niedrig siedender Alkohole,
d) 30 - 50 Gew.-% Wasser und
e) 4 - 8 Gew.-% Hilfsmittel

enthält.

EP 0 613 491 B1

Als Pigmente können sowohl marktübliche organische Buntpigmente als auch synthetische Ruße eingesetzt werden, die z.B. unter den Namen Printex 25, 35, 300, 140V oder Spezialschwarz 4 (Fa. Degussa) oder Elftex 415 (Fa. Cabot) im Handel sind. Als Buntpigmente können neben den zur Schonung von Rußen eingesetzten Pigmenten auch andere Buntpigmente eingesetzt werden. So können z.B. Reflexblau R51 (C.I.: PB 61, Fa. Hoechst), Permanentgelb GR01 (C.I.:PY 13), Litholrubin D4569 (C.I.:PR 57:1; Fa. BASF), Heliogenblau D7080, Heliogenblau D7084 DD (C.I.: P.B. 15:3; Fa. BASF) oder Miloriblau, verwendet werden.

Als niedrig siedende Alkohole können vorzugsweise Isopropanol und Ethanol eingesetzt werden.

Als Hilfsmittel können handelsübliche Polyethylenwachse wie zum Beispiel Vestowachs A 616 (Fa. Hüls), Ceridust 3620 (Fa. Hoechst), Polyethylenwachsdispersionen, wie z.B. Polyrub FA 12 (Fa. Polychimie), Silikon- und Mineralölentschäumer, wie zum Beispiel Tego Foamex 3062, Defoamer WO 144 (Fa. Worlee), Filmbildungshilfsmittel, wie z. B. Glykole oder Glykolether, Netzmittel, wie z.B. Emulgator U (einem Polyglycolester einer carbozyklischen Karbonsäure (Fa. Bayer)), Füllstoffe, wie z.B. $CaCO_3$, $CaSO_4$, $SiO_2$, Aluminiumsilikate, Schichtsilikate etc., Dispergierhilfsmittel, wie z.B. nichtionische bzw. kationische Tenside, und Neutralisierungsmittel, wie z.B. Milchsäure oder Ammoniak eingesetzt werden.

In einer besonderen Ausführungsform der erfindungsgemäßen Wasserfarbe können die Acrylharze in Form einer Dispersion, einer Emulsion oder einer Lösung vorliegen.

Insbesondere bevorzugt sind folgende wasserverdünnbare Acrylharze:

<u>Bindemittel A:</u>    Selbstvernetzende nichtionische reine Acrylatdispersionen

| Festkörpergehalt (DIN 53 785) : | $45 \pm 2\%$ |
|---|---|
| pH-Wert : | 2.0 - 5.0 |
| Viskosität (DIN 53 019/53214) : | 50 - 250 mPas |
| Mindestfilmbildungstemperatur (DIN 53 787) : | ca. 0°C |
| Dichte (DIN 53 217) : | ca. 1.02 g/cm$^3$ |
| Mittlerer Teilchendurchmesser : | ca. 0,10 µm |
| Reißdehnung des Films (DIN 53 455) : | ca. 800% bei 23°C |
| " nach 24h Wasserlagerung : | ca. 750% |
| Volumenquellung nach 24h Lagerung im Wasser : | ca. 82% |
| Glasübergangstemperatur Tg (DSC) : | <0°C |

<u>Bindemittel B:</u>    Selbstvernetzende nichtionische Acrylatdispersionen (überwiegend Alkylsubstituierte Acrylsäure ($C_1$-$C_{24}$), Acrylnitril bzw. Acrylamid als Comonomere)

| Festkörpergehalt : | $45 \pm 2\%$ (Rest Wasser) |
|---|---|
| pH-Wert : | 4.0 - 7.0 |
| Viskosität : | 50 - 250 mPas |
| MFT : | ca. 15°C |
| Dichte : | ca. 1.02 g/cm$^3$ |
| Mittlerer Teilchendurchmesser : | ca. 0,1 - 0,2 µm |
| Reißdehnung des Films : | ca. 200 - 500% bei 23°C |

<u>Bindemittel C:</u>    Selbstvernetzende nichtionische Acrylatdispersionen (überwiegend Reinacrylate ($C_1$-$C_{24}$), Acrylnitril bzw. Acrylamid als Comonomere)

| Festkörpergehalt : | $45 \pm 2\%$ (Rest Wasser) |
|---|---|
| pH-Wert : | 2.0 - 4.0 |
| Viskosität : | 50 - 300 mPas |
| MFT : | ca. 40°C |
| Dichte : | ca. 1.02 g/cm$^3$ |
| Mittlerer Teilchendurchmesser : | ca. 0,1 µm |

Bindemittel D:     Selbstvernetzende Polymerisatdispersion auf Basis von thermoplastischen Acrylsäureestern

| | |
|---|---|
| Festkörpergehalt : | 45 ± 1% (Rest Wasser) |
| pH-Wert : | 3.5 - 4.5 |
| Viskosität : | 15 - 100 mPas |
| MFT : | ca. 0°C |
| Dichte : | ca. 1.02 g/cm$^3$ |
| Mittlerer Teilchendurchmesser : | ca. 0,8 μm (weitgehend monodispers) |
| Ladung : | schwach anionisch |
| Reißdehnung des Films : | ca. 650% |
| Reißdehnung nach Wasserlagerung : | ca. 400% |
| Volumenquellung nach Lagerung 24h im Wasser : | ca. 48% |

Die erfindungsgemäße Wasserfarbe eignet sich nicht nur zur Herstellung von Drucken, sondern auch zur Herstellung von bunten Papieren. Die Herstellung dieser Papiere kann durch Bedrucken im Flexo- bzw. Tiefdruckverfahren, durch teilweises oder vollständiges Einfärben von Papieren oder beim Streichverfahren zur Herstellung von Papierstrichen erfolgen. Dabei erwiesen sich Mischungsverhältnisse von Streichmasse zu deinkbarer Farbe von 20:1 bis 3:1 als vorteilhaft. Besonders vorteilhaft ist ein Verhältnos von 9:1.

Das Deinken der mit den erfindungsgemäßen Wasserfarben hergestellten Drucke wurde nach dem Deinking-Verfahren gemäß der Labormethode des Papiertechnischen Instituts der Papiertechnischen Stiftung, München, vom 25.11.1980 durchgeführt.

Der Weißgrad von Probeblättern wird durch Bestimmung des Reflektionsfaktors für eine Schwerpunktwellenlänge von 457nm nach DIN53 145-Teil 1, August 1978, gemessen.

Für jede Probeblatt-Art werden an mindestens drei Probeblättern auf ihrer Oberseite, bezogen auf die Blattbildung, insgesamt 12 Einzelmessungen durchgeführt. Berechnet wird jeweils der arithmetische Mittelwert, die Standardabweichung und der Variationskoeffizient der Einzelwerte.

Aus den Weißgradmittelwerten (WG) der Probeblätter des bedruckten Stoffes (BS), des unbedruckten Stoffes (US) und des deinkten Stoffes (DS) wird die Deinkbarkeits-Maßzahl (DEM) wie folgt berechnet:

$$\text{DEM (\%)} = \frac{\text{WG (DS) - WG (BS)}}{\text{WG (US) - WG (BS)}} \ 100$$

Die Messungen der Deinkbarkeitsmaßzahl und des Weißgrads erfolgten nach dem Deinken von Drucken, die mit den erfindungsgemäßen Wasserfarben, wie sie in den Beispielen 1 bis 8 beschrieben sind, hergestellt wurden.

Beispiel 1

Eine Mischung aus 30g Emulgator U, 185g Wasser, 3g Defoamer WO144, 5g Diethanolamin, 130g Elftex 415, 5g Reflexblau R51 und 30g Aluminiumsilikat P820 wird nach Homogenisieren mit einem Labordissolver auf eine Dreiwalze bzw. Rührwerkskugelmühle überführt angerieben, d.h. dispergiert. Der Mahlansatz wird aufgelackt mit 400g Bindemittel A, 50g Propylenglycol und Wasser auf 1.000g ergänzt. Die druckfertige Farbe kann anschließend noch mit 2 - 30% Wasser verdünnt werden kann.

Beispiel 2

Es wird die Rezeptur des Beispiels 1 verwendet, wobei jedoch anstelle von Elftex 415 110g Printex 140V und 20g Printex 25 im Mahlansatz eingesetzt werden.

Beispiel 3

Es wird die Rezeptur des Beispiels 2 verwendet, wobei jedoch anstelle von Bindemittel A nun Bindemittel B eingesetzt wird.

Beispiel 4

Es wird die Rezeptur des Beispiels 2 verwendet, wobei jedoch anstelle von Bindemittel A nun Bindemittel C eingesetzt wird.

Beispiel 5

Es wird die Rezeptur des Beispiels 2 verwendet, wobei jedoch anstelle von Bindemittel A nun Bindemittel D eingesetzt wird.

Beispiel 6

Es wird die Rezeptur des Beispiels 1 verwendet, wobei jedoch anstelle von Elftex 415 und Reflexblau R51 Permanentgelb GR01 im Mahlansatz eingesetzt werden.

Beispiel 7

Es wird die Rezeptur des Beispiels 1 verwendet, wobei jedoch anstelle von Elftex 415 und Reflexblau R51 Litholrubin D4569 im Mahlansatz eingesetzt werden.

Beispiel 8

Es wird die Rezeptur des Beispiels 7 verwendet, wobei jedoch anstelle von Litholrubin D4569 Heliogenblau D7084DD im Mahlansatz eingesetzt wird.

Beispiel 9 (Vergleich)

Eine Mischung aus 320g FV951V45 (wasserverdünnbares kationisches Acrylharz; Fa. PPG Corbona), 40g Printex 140V, 60g Printex 25, 5g Vestowachs A616, 1g Tego Foamex 3062, 30g Propylenglycol und 54g Wasser wird nach Homogenisieren mit einem Labordissolver auf eine Dreiwalze überführt und mit 2-3 Passagen angerieben, d.h. dispergiert. Der Mahlansatz wird mit 120g FV951V45 aufgelackt und mit 1.000g Wasser ergänzt. Nach Homogenisieren mit einem Labordissolver erhält man eine druckfertige Farbe (1.000g).

Beispiel 10 (Vergleich)

Eine Mischung aus 50g Printex 140V, 70g Printex 25, 15g Heliogenblau 7080, 350g Joncryl 61 (anionisches Acrylharz), 40g Wasser und 3g Defoamer W0144 wird nach Homogenisieren mit einem Labordissolver auf eine Dreiwalze überführt und mit 2-3 Passagen angerieben. Der Mahlansatz wird mit 300g Joncryl 90 (anionisches Acrylharz), 40g Polyrub FA12 und 1g Tego Foamex 3062 aufgelackt und Wasser auf 1.000g ergänzt.

Bei den erfindungsgemäß aufgebauten Wasserfarben ergaben sich die in der Tabelle aufgeführten, besonders vorteilhaften Werte bezüglich der Deinkbarkeits-Maßzahl und des Weißgrades.

Als Bedruckstoff wurde jeweils Zeitungspapier mit einem Weißgrad von ca. 62% verwendet. Weitere Untersuchungen haben ergeben, daß die Ergebnisse durch die Sorte des Papiers nur wenig beeinflußt werden.

(Tabelle 1)

| ERGEBNISSE | | |
|---|---|---|
| Beispiel | DEM (%) | WG (DS) (%) |
| 1 | 76 | 59 |
| 2 | 79 | 61 |
| 3 | 49 | 51 |
| 4 | 47 | 48 |
| 5 | 68 | 58 |
| 6 | 71 | 59 |
| 7 | 50 | 49 |
| 8 | 84 | 62 |

(Tabelle 1)   (fortgesetzt)

| ERGEBNISSE | | |
|---|---|---|
| Beispiel | DEM (%) | WG (DS) (%) |
| 9 | 46 | 50 |
| 10 | nicht gegeben | 32 |

Aus der Tabelle ergibt sich, daß gegenüber den bisher von der Anmelderin als nächstkommenden Stand der Technik erzielten Werte sich für die Deinkbarkeits-Maßzahl eine Verbesserung von 50 auf über 70 DEM (%) und für den Weißgrad von etwa 50 auf etwa 60 WG(DS)(%) ergibt. Diese extrem hohen DEM und WG-Werte liegen weit über den bisher üblichen sog. Flexostandardwerten von 25 für DEM(%) und 35 für WG(DS)(%). Die mit den erfindungsgemäßen Farben erreichbaren Werte liegen sogar über denen des sog. Offset-Standard in Zeitungsdruck, die bei 55 für DEM (%) und 50 für WG(DS) (%) liegen.

Weiterhin ergab sich überraschenderweise, daß das Prozeßwasser während des Deinkingprozesses bei Verwendung der erfindungsgemäßen Wasserfarben nahezu farblos ist, während es bei Verwendung von Wasserfarben nach dem Stand der Technik stets stark angefärbt ist durch feinst verteilte Pigmentteilchen, was sich bei der Papierherstellung störend auswirkt.

Mit den erfindungsgemäßen Wasserfarben, die insbesondere im Flexo- und Tiefdruck sowie beim Streichverfahren zur Herstellung von Papierstrichen einsetzbar sind, lassen sich somit Drucke und gefärbte Papiere herstellen, die im Flotationsverfahren zu überraschenden, ganz hervorragenden Deinkingergebnissen führen.

**Patentansprüche**

1.  Wasserfarbe, die zur Herstellung von im Flotationsverfahren deinkbaren Erzeugnisse geeignet ist,
    **dadurch gekennzeichnet,** daß sie im wesentlichen

    a) 1 - 50 Gew.-% eines oder mehrerer anorganischer oder organischer Pigmente,
    b) 1 - 50 Gew.-% (Festkörper) eines oder mehrerer wasserverdünnbarer nichtionischer und/oder selbstvernetzender Acrylharze,
    c) 0 - 25 Gew.-% eines oder mehrerer niedrig siedender Alkohole,
    d) 10 - 90 Gew.-% Wasser und
    e) 0 - 20 Gew.-% Hilfsmittel

    enthält.

2.  Wasserfarbe nach Anspruch 1,
    **dadurch gekennzeichnet**, daß sie im wesentlichen

    a) 8 - 17 Gew.-% eines oder mehrerer anorganischer oder organischer Pigmente,
    b) 15 - 45 Gew.-% (Festkörper) eines oder mehrerer wasserverdünnbarer nichtionischer und/oder selbstvernetzender Acrylharze
    c) 0 - 5 Gew.-% eines oder mehrerer niedrig siedender Alkohole,
    d) 20 - 60 Gew.-% Wasser und
    e) 1 - 10 Gew.-% Hilfsmittel

    enthält.

3.  Wasserfarbe nach Anspruch 2,
    **dadurch gekennzeichnet**, daß sie im wesentlichen,

    a) 10 - 15 Gew.-% eines oder mehrerer anorganischer oder organischer Pigmente,
    b) 25 - 42 Gew.-% (Festkörper) eines oder mehrerer wasserverdünnbarer nichtionischer und/oder selbstvernetzender Acrylharze,
    c) 0 - 1 Gew.-% eines oder mehrerer niedrig siedender Alkohole,
    d) 30 - 50 Gew.-% Wasser und
    e) 4 - 8 Gew.-% Hilfsmittel

enthält.

**4.** Wasserfarbe nach einem der Ansprüche 1 bis 3,
**dadurch gekennzeichnet,**
daß die wasserverdünnbaren nichtionischen und/oder sellbstvernetzenden Acrylharze eine Dispersion, Emulsion oder Lösung umfassen.

**5.** Verwendung einer Wasserfarbe nach einem der Ansprüche 1 bis 4 beim Flexodruckverfahren.

**6.** Verwendung einer Wasserfarbe nach einem der Ansprüche 1 bis 4 beim Tiefdruckverfahren.

**7.** Verwendung einer Wasserfarbe nach einem der Ansprüche 1 bis 4 beim Streichverfahren zur Herstellung von Papierstrichen.

**8.** Verwendung einer Wasserfarbe nach einem der Ansprüche 1 bis 4 zur teilweisen bzw. vollständigen Einfärbung von Papieren.

**Claims**

**1.** Water-based ink suitable for the printing of products which can be de-inked using a flotation process, characterized in that it substantially contains:

a) 1-50 % by wt. of one or more inorganic or organic pigments,
b) 1-50 % by wt. (solids) of one or more water-dilutable non-ionic and/or self-crosslinking acrylic resins,
c) 0-25 % by wt. of one or more low-boiling alcohols,
d) 10-90 % by wt. of water, and
e) 0-20 % by wt. of auxiliaries.

**2.** Water-based ink according to claim 1, characterized in that it substantially contains:

a) 8-17 % by wt. of one or more inorganic or organic pigments,
b) 15-45 % by wt. (solids) of one or more water-dilutable non-ionic and/or self-crosslinking acrylic resins,
c) 0-5 % by wt. of one or more low-boiling alcohols,
d) 20-60 % by wt. of water, and
e) 1-10 % by wt. of auxiliaries.

**3.** Water-based ink according to claim 2, characterized in that it substantially contains:

a) 10-15 % by wt. of one or more inorganic or organic pigments,
b) 25-42 % by wt. (solids) of one or more water-dilutable non-ionic and/or self-crosslinking acrylic resins,
c) 0-1 % by wt. of one or more low-boiling alcohols,
d) 30-50 % by wt. of water, and
e) 4-8 % by wt. of auxiliaries.

**4.** Water-based ink according to any of the claims 1 to 3, characterized in that the water-dilutable non-ionic and/or self-crosslinking acrylic resins comprise a dispersion, emulsion or solution.

**5.** Use of a water-based ink according to any of the claims 1 to 4 in the flexographic printing process.

**6.** Use of a water-based ink according to any of the claims 1 to 4 in the gravure printing process.

**7.** Use of a water-based ink according to any of the claims 1 to 4 in the coating process for the production of coated paper.

8. Use of a water-based ink according to any of the claims 1 to 4 for a partial or complete coloring of papers.

**Revendications**

1. Encre à l'eau adaptée à la fabrication de produits dont l'encre peut être éliminée dans un procédé de flottation, caractérisée en ce qu'elle comprend principalement

   a) 1 à 50% en poids d'un ou plusieurs pigments organiques ou minéraux,
   b) 1 à 50% en poids (matières non volatiles) d'une ou plusieurs résines acryliques diluables dans l'eau non ioniques et/ou auto-réticulables,
   c) 0 à 25% en poids d'un ou plusieurs alcools à bas point d'ébullition,
   d) 10 à 90% en poids d'eau et
   e) 0 à 20% en poids d'additifs.

2. Encre à l'eau selon la revendication 1,
   caractérisée en ce qu'elle comprend principalement

   a) 8 à 17% en poids d'un ou plusieurs pigments organiques ou minéraux,
   b) 15 à 45% en poids (matières non volatiles) d'une ou plusieurs résines acryliques diluables dans l'eau non ioniques et/ou auto-réticulables,
   c) 0 à 5% en poids d'un ou plusieurs alcools à bas point d'ébullition,
   d) 20 à 60% en poids d'eau et
   e) 1 à 10% en poids d'additifs.

3. Encre à l'eau selon la revendication 2,
   caractérisée en ce qu'elle comprend principalement

   a) 10 à 15% en poids d'un ou plusieurs pigments organiques ou minéraux,
   b) 25 à 42% en poids (matières non volatiles) d'une ou plusieurs résines acryliques diluables dans l'eau non ioniques et/ou auto-réticulables,
   c) 0 à 1% en poids d'un ou plusieurs alcools à bas point d'ébullition,
   d) 30 à 50% en poids d'eau et
   e) 4 à 8% en poids d'additifs.

4. Encre à l'eau selon l'une quelconque des revendications 1 à 3,
   caractérisée en ce que
   les résines acryliques diluables dans l'eau non ioniques et/ou auto-réticulables comprennent une dispersion, une émulsion ou une solution.

5. Utilisation d'une encre à l'eau selon l'une quelconque des revendications 1 à 4 dans un procédé de flexographie.

6. Utilisation d'une encre à l'eau selon l'une quelconque des revendications 1 à 4 dans un procédé d'héliogravure.

7. Utilisation d'une encre à l'eau selon l'une quelconque des revendications 1 à 4 dans un procédé de couchage pour la fabrication de papier couché.

8. Utilisation d'une encre à l'eau selon l'une quelconque des revendications 1 à 4 pour la coloration partielle respectivement totale de papiers.